Europäisches Patentamt

European Patent Office

Office européen des brevets

(19)

(11)  EP 1 068 920 B1

(12)  **EUROPEAN PATENT SPECIFICATION**

(45) Date of publication and mention
of the grant of the patent:
**12.11.2003  Bulletin 2003/46**

(51) Int Cl.⁷: **B23D 57/00**

(21) Application number: **00203452.8**

(22) Date of filing: **29.09.1995**

(54) **Wire saw**

Drahtsäge

Scie a fil

(84) Designated Contracting States:
**AT CH DE FR GB IT LI SE**

(30) Priority: **30.09.1994  JP  23757494**
**27.12.1994  JP  32558394**
**31.03.1995  JP  7629595**
**31.08.1995  JP  22425695**
**07.09.1995  JP  23037895**

(43) Date of publication of application:
**17.01.2001  Bulletin 2001/03**

(62) Document number(s) of the earlier application(s) in
accordance with Art. 76 EPC:
**95932951.7 / 0 732 173**

(73) Proprietor: **Nippei Toyama Corporation**
**Shinagawa-ku, Tokyo-to 140 (JP)**

(72) Inventors:
• **Shiraga, Mitsuhiro**
**Higashi-Tonami-gun, Toyama-ken 939-1595 (JP)**
• **Osawa, Hitoshi**
**Higashi-Tonami-gun, Toyama-ken 939-1595 (JP)**
• **Ito, Yasuhiro**
**Higashi-Tonami-gun, Toyama-ken 939-1595 (JP)**
• **Katsumata, Noboru**
**Higashi-Tonami-gun, Toyama-ken 939-1595 (JP)**
• **Adachi, Toshiharu**
**Higashi-Tonami-gun, Toyama-ken 939-1595 (JP)**

• **Uchikawa, Junichi**
**Higashi-Tonami-gun, Toyama-ken 939-1595 (JP)**
• **Kinutani, Kazutomo**
**Higashi-Tonami-gun, Toyama-ken 939-1595 (JP)**
• **Moriyama, Yasuhiko**
**Higashi-Tonami-gun, Toyama-ken 939-1595 (JP)**

(74) Representative: **Hammer, Bruno, Dr.**
**Sunneraiweg 21**
**8610 Uster (CH)**

(56) References cited:
• **PATENT ABSTRACTS OF JAPAN vol. 016, no.
440 (M-1310), 14 September 1992 (1992-09-14) &
JP 04 152061 A (NIPPEI TOYAMA CORP), 26 May
1992 (1992-05-26)**
• **PATENT ABSTRACTS OF JAPAN vol. 012, no.
286 (M-727), 5 August 1988 (1988-08-05) & JP 63
062655 A (YASUNAGA
TEKKOSHO:KK;OTHERS: 01), 18 March 1988
(1988-03-18)**
• **PATENT ABSTRACTS OF JAPAN vol. 013, no.
055 (M-795), 8 February 1989 (1989-02-08) & JP
63 260757 A (NIPPEI TOYAMA CORP), 27
October 1988 (1988-10-27)**
• **PATENT ABSTRACTS OF JAPAN vol. 014, no.
212 (M-0969), 2 May 1990 (1990-05-02) & JP 02
048163 A (OTARU SEISAKUSHO:KK), 16
February 1990 (1990-02-16)**

EP 1 068 920 B1

**Description**

TECHNICAL FIELD

The present invention relates to wire saws used to cut materials such as semi-conducting material and magnetic material.

BACKGROUND ART

This type of wire saw has a plurality of cutting rollers about which a single strand of wire is spirally wound a number of times. Rotation of the cutting rollers causes the wire to travel in its extended direction. The moving wire is brought into contact with a workpiece. Slurry, which includes abrasive grains, is applied to the contact area. This results in the workpiece being sliced by the wire and thus produces a plurality of wafers simultaneously.

Such type of apparatus is provided with a wire, the ends of which are wound about a pair of reel bobbins. The wire is unwound from one of the reel bobbins toward the cutting rollers, passes by the cutting rollers, and is wound about the other reel bobbin.

As described in U.S. Patent No. 5201305 and Japanese Unexamined Patent Publication No. 1-295758, in the prior art, the pair of reel bobbins were each supported by a pair of bearings in a manner that the axes of the bobbins extended horizontally.

In recent years, the reserved wire length of the reel bobbins has become longer to perform continuous cutting over a long period of time and to increase the number of cut pieces per unit time by increasing the traveling velocity of the wire. This has resulted in enlargement of the reel bobbins and has thus increased the weight of the bobbins, including the weight of the wire.

Therefore, supporting the heavy reel bobbins in a cantilevered manner was difficult since the pair of reel bobbins were supported horizontally. Hence, due to each reel bobbin being supported by a pair of bearings, a total number of four sets of bearings were required. This caused an increase in the number of parts and caused the structure to become complicated. In addition, the bearings, which were located on both outer sides of the reel bobbins, caused an enlargement of the entire reel mechanism. Furthermore, since it was necessary to accurately align the axes of the pair of bearings, the reel mechanism required components having high dimensional precision and also required accuracy during assembly. This lead to an increase in manufacturing costs. When exchanging the wire, it was necessary to lift, lower, and position the reel bobbin at a location between the pair of bearings with the bobbin held horizontally in order to align the bobbin with the bearings or to remove the bobbin from the bearings. This operation was thus burdensome.

Additionally, engaging of the spirally wound wire with flanges, which are formed on both ends of the reel bobbin, results in a pressing force acting on the flanges in the axial direction of the reel bobbin. This results in deformation of the reel bobbin's flanges. Deformation of the flanges hinders the bundle of the wire, defined about the body of the reel bobbin, from having an even width along the axial direction of the bobbin and from being arranged in an even manner. It also causes the wire wound onto the bundle to press into the wire of the bundle. As a result, during unwinding of the wire, fluctuation in the wire's tension may lead to a degradation in the cutting accuracy of the wire or a rupture of the wire due to excessive tension acting on the wire.

Furthermore, when the reel bobbin is supported laterally, the body of the reel bobbin is deflected downward by its own weight and by the wire's weight. This also impedes the wire from being wound in an even manner. Upgrading the strength of the reel bobbin to cope with this problem increases the weight of the bobbin itself. This also enlarges the bearings, which support the reel bobbins, and the motor, which rotates the reel bobbin. This leads to an enlargement of the peripheral mechanisms of the reel bobbin.

**The Japanese patent applications JP 04 152061 A discloses a wire saw with the features of the preamble of claim 1.**

The objective of the present invention is to provide a wire saw capable of always maintaining constant tension of the traveling wire regardless of changes in the winding diameter of the wire wound about the pair of reel bobbins.

DISCLOSURE OF THE INVENTION

The invention is defined in claim 1. Dependent claims 2 to 21 relate to preferred embodiments.

In the present invention, the tension of the traveling wire is maintained constant regardless of changes in the winding diameter of the wire wound about the reel bobbins. This contributes to a stable cutting quality.

BRIEF DESCRIPTION OF THE DRAWINGS

Fig. 1    is a front view showing a wire saw entirely.

Fig. 2    is a plan view showing the wire saw entirely.

Fig. 3    is a graph showing the traveling direction and the traveling velocity of the wire.

Fig. 4    is a partial front view showing a reel device.

Fig. 5    is a plan view showing the reel device.

Fig. 6    is a partial side view showing the reel device.

Fig. 7    is a front view showing a tension applying device.

Fig. 8    is a cross-sectional view taken along line 8-8 in Fig. 7.

Fig.9    is an enlarged cross-sectional view showing a strain gauge.

Fig. 10    is a block diagram illustrating the electrical structure of the wire saw.

Fig. 11    is a flowchart related to judgment of the remaining length of the wire.

Fig. 12    is a flowchart related to compensation of the reel bobbin rotation.

Fig. 13    is a graph illustrating the relationship between the wire traveling velocity and the reel winding diameter.

Fig. 14    is a flowchart illustrating the completion of operation.

Fig. 15    is a partial front view showing the reel device.

Fig. 16    is a flowchart illustrating reversing compensation of a traverser.

Fig. 17    is a flowchart illustrating the second embodiment.

Fig. 18    is a flowchart illustrating the third embodiment.

Fig. 19    is a cross-sectional view showing the wire winding state of the reel bobbin according to the third embodiment.

Fig. 20    is a front view of showing the dimensions of each section of the reel bobbin according to the third embodiment.

Fig. 21    is a cross-sectional view showing the wire winding state of the reel bobbin according to the third embodiment.

Fig. 22    is a cross-sectional view showing the wire winding state of the reel bobbin according to the third embodiment.

BEST MODE FOR CARRYING OUT THE INVENTION

(First Embodiment)

Entire Constitution

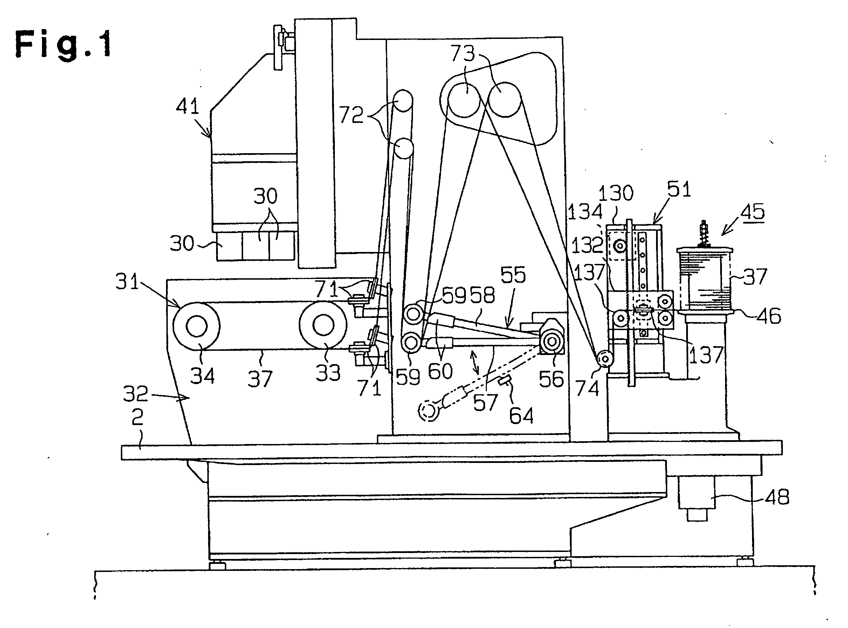

A first embodiment according to the present invention will hereafter be described with reference to Figs. 1 through 16.

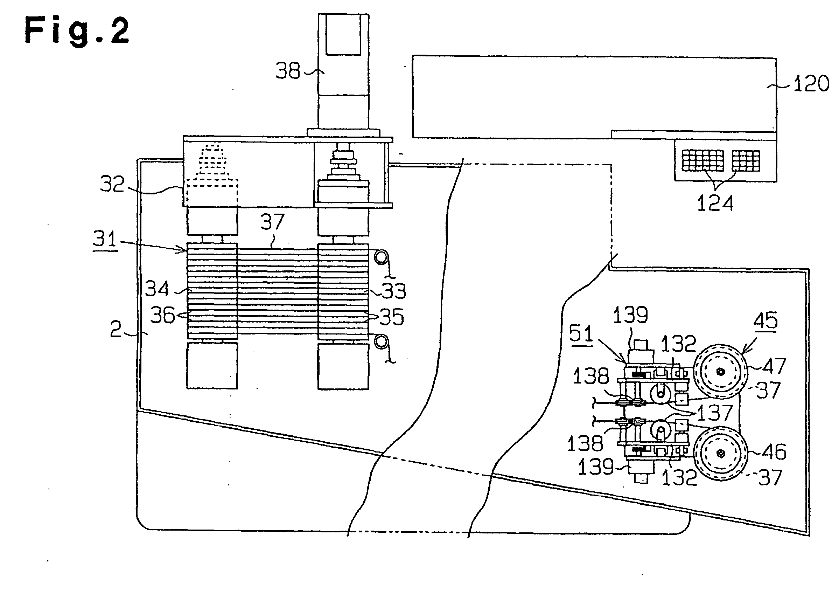

As shown in Figs. 1 and 2, a cutting device 31 is provided on a machine plate 32, which is mounted on a bed 2. The cutting device 31 includes a drive roller 33 and a driven roller 34, which extend parallel to each other and serve as cutting rollers. A plurality of parallel annular grooves 35, 36 are formed on the peripheral surface of the drive roller 33 and driven roller 34, respectively. The pitch of the grooves 35, 36 are illustrated wider than actual in the drawings to facilitate understanding. However, they are actually arranged with a pitch in the range of 0.3 millimeters to a few millimeters. The pitch of the grooves 35, 36 is selected in accordance with the cutting conditions.

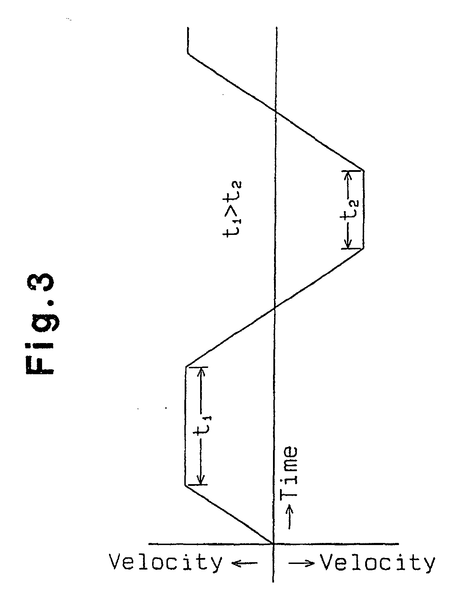

A single strand of cutting wire 37 is spirally and continuously wound about the grooves 35, 36 of the associated rollers 33, 34. A motor 38, which is capable of rotating in the forward and the reverse direction, is provided on the machine frame 32. The motor 38 rotates the drive roller 33. By driving the drive roller 33, the wire 37 travels in its extended direction. As shown in Fig. 3, when the rotation of the motor 38 is reversed, the traveling time t1 of the wire 37 traveling in one direction is longer than the traveling time t3 of the wire 37 traveling in the opposite direction. Accordingly, the wire 37 gradually advances in a predetermined direction as the traveling direction of the wire 37 is periodically reversed.

A workpiece supporting device 41 is supported by the frame 32 above the cutting device 31 in a manner such that it is capable of moving upward and downward. A plurality of workpieces 30 are set at the lower section of the supporting device 41. The workpiece supporting device 41 is lowered toward the cutting device 31 when the wire 37 travels between the rollers 33, 34 of the cutting device 31. Simultaneously, a slurry supplying device, which is not shown, supplies slurry that includes abrasive grains to the wire 37. The workpieces 30 are pressed against the wire 37 and sliced by the lapping action of the abrasive grains.

As shown in Figs. 1, 2 and Figs. 4 to 6, a reel device 45 is mounted on the frame 32. The reel device 45 is provided with first and second reel bobbins 46, 47. The wire 37 is wound on either the first reel bobbin 46 or the second reel bobbin 47, and unwound from either the second reel bobbin 47 or the first reel bobbin 46 as the wire 37 travels in one direction or the opposite direction. The rotating direction of first and second motors 48, 49, which are servo motors, are switched periodically as shown in Fig. 3. The first reel bobbin 46 and the second reel bobbin 47 are rotated by the motors 48, 49, respectively. Just before the wire 37 on the first or second reel bobbin 46, 47 is completely wound on the second reel bobbin 47 or the first reel bobbin 46, the rotating direction of both reel bobbins 46, 47 is switched. This switches the unwinding function and winding function of the reel bobbins 46, 47.

A traversing device 51 is mounted on the frame 32, adjacent to the reel device 45, and is provided with a traverser 143. The traverser 143 guides both the unwinding of the wire 37 from either the first reel bobbin 46 or the second reel bobbin 47, and the winding of the wire 37 about either the second reel bobbin 47 or the first reel bobbin 46 as it is traversed upward or downward.

As shown in Figs. 1, 2, 7, and 8, a tension applying device 55 is arranged between the reel device 45 and the cutting device 31 to apply tension to the wire 37. The applying device 55 has a pair of shafts 56 which are rotatably supported by the frame, and a pair of dancer arms 57, 58, each of which are fixed to one of the shafts 56. Guide rollers 59 and weights 60 are attached to the distal section of both dancer arms 57, 58. The dancer arms 57, 58 and the guide rollers 59 constitute a displacement member. A pair of sensors 61, 62, which are composed of encoders and connected to each shaft 56, detects the rotation of the shafts 56 and transmit a detection signal, which corresponds to the pivoting position of the dancer arms 57, 58. A stopper 63 projects from the front surface of the frame 32. The lowermost position of the dancer arms 57, 58 are restricted by the engagement with the stopper 63. A limit switch 64 transmits detection signals when the dancer arms 57, 58 are positioned at the lowermost position. When the detection signal is transmitted from the limit switch 64, the operation of the wire saw is stopped.

As shown in Figs. 1 and 2, guide rollers 71, 72, 73, 74 are arranged between the cutting device 31 and the applying device 55, and between the applying device 55 and the reel device 45 to guide the traveling wire 37. The wire 37 unwound from either the first or the second reel bobbin 46, 47 reaches the cutting device 31 by way of one of the guide rollers 74, one of the guide rollers 73, one of the rollers 59 of the applying device 55, one of the guide rollers 72, and one set of the guide rollers 71. From the cutting device 31, the wire 37 is wound about either the second or the first reel bobbin 47, 46 by way of the other set of guide rollers 71, the other guide roller 72, the other roller 59 of the applying device 59, and the other guide rollers 73, 74. The weight 60 provided on the dancer arms 57, 58 of the applying apparatus 55 applies a predetermined tension to the full length of the wire 37 including the wire 37 between the rollers 33, 34.

Reel Device

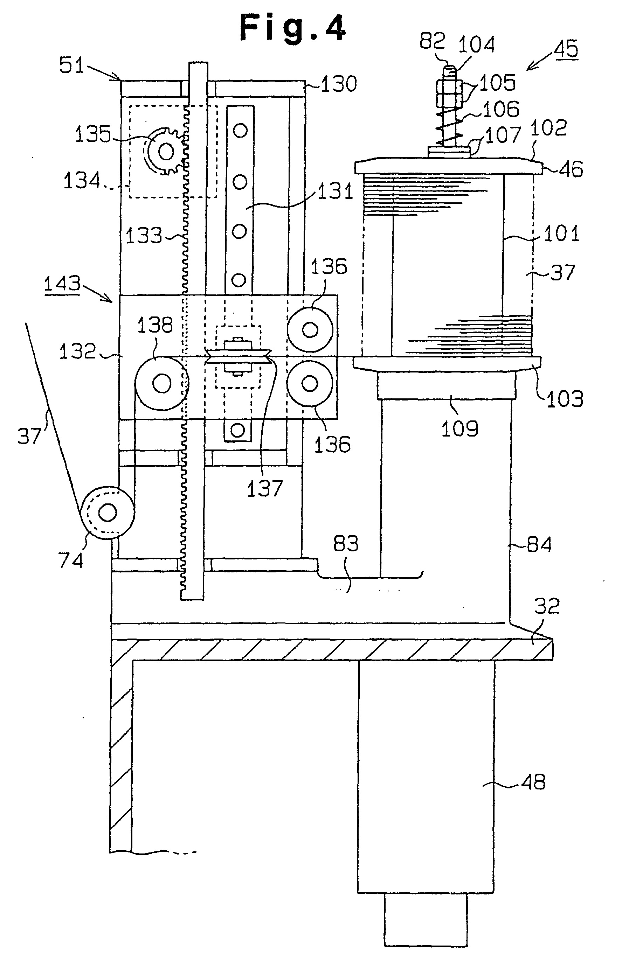

As shown in Figs. 4 to 6 and 9, the first and second motors 48, 49, the rotating direction and rotating speed of which are variable, are connected to cylindrical bodies 84, which are mounted on the bed 2. Motor shafts 85, 86 project from the upper surface of the motors 48, 49, respectively. Rotary shafts 87 are rotatably supported by upper bearings 88 and lower bearings 89, which receive load in the axial direction and the radial direction, in the cylindrical bodies 84. A flange 91 is formed integrally with the upper end of each rotary shaft 87. Couplings 92 connect the motor shafts 85, 86 with each rotary shafts 87.

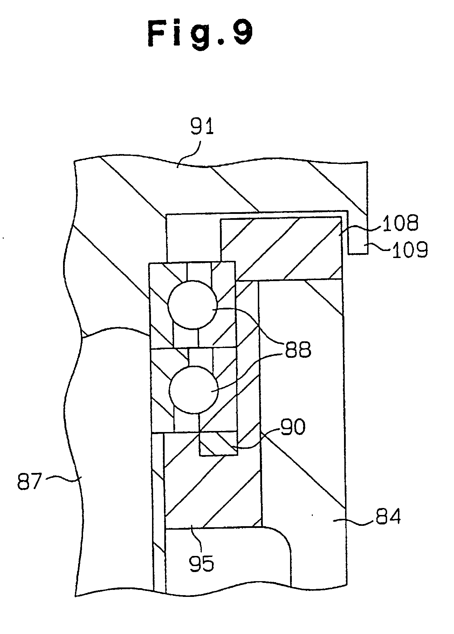

As shown in Fig. 9, a strain gauge 90 is retained in each cylindrical body 84 so that it contacts the lower surface of the outer race of the upper bearing 88. The gauge 90 detects the axial load of the rotary shafts 87, which is produced by the weight of the first reel bobbin 46 and the second reel bobbin 47.

The first reel bobbin 46 and the second reel bobbin 47 are arranged on the flange 91 of each rotary shaft 87, and are restricted from rotating with respect to the flange 91 by pins 94. The first reel bobbin 46 and the second reel bobbin 47 are arranged in a manner such that their axes M1, M2 extend along the vertical direction. Rods 82 are provided at the center of the flange 91 with double nuts 105 fastened to a threaded section 104, defined at their upper ends. Coil springs 106, which serve as an elastic member, are located between the double nuts 105 and two plate-like rings 107, which are provided on the upper surface of the first and second reel bobbins 46, 47. The springs 106 press the reel bobbins 46, 47 against the upper surface of the flanges 91.

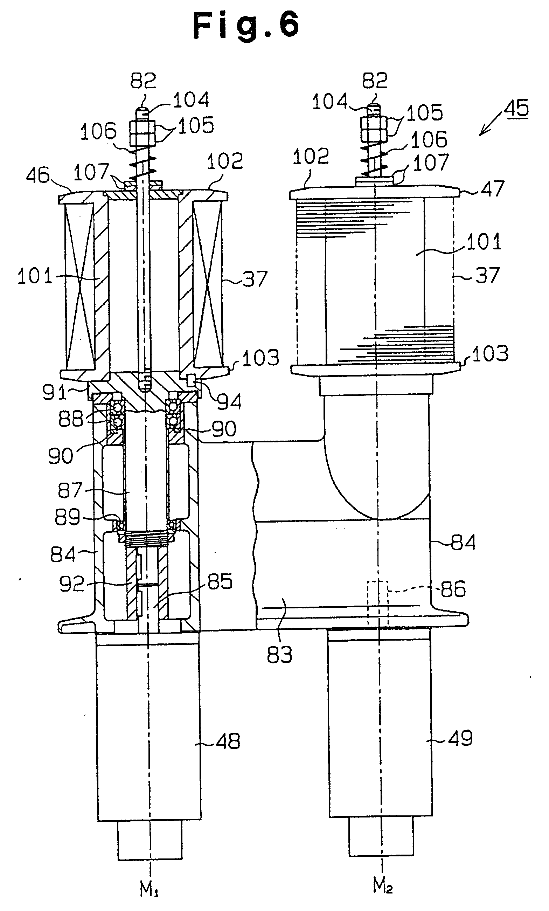

As shown in Fig. 6, the reel bobbins 46, 47 each have a body 101 and a pair of flanges 102, 103, which are formed integrally from aluminum alloy.

A seal 108, shown in Fig. 9, is located between the top surface of each cylindrical body 84 and the lower surface of the flange 91. A cylindrical skirt 109 is formed integrally with the lower peripheral section of each flange 91 in a manner such that it encompasses the peripheral surface of the seal 108. The skirt 109 prevents slurry from entering through the side of the upper bearings 88 and upgrades the durability of the upper bearings 88.

As shown in Fig. 1, the reel bobbins 46, 47 are supported by the associated rotary shafts 87 in a manner such that their associated axes M1, M2 are oriented in a vertical direction. In other words, the reel bobbins 46, 47 are arranged on the flange 91 of the associated rotary shaft 87 so that they extend along the vertical direction. Accordingly, only a total of two sets of the bearings 88, 89, which support the reel bobbins 46, 47, are required to be provided below the reel bobbins 46, 47. This enables a reduction in the number of bearings and simplifies the structure. It also facilitates production.

Since bearings are provided on only one side of the reel bobbins 46, 47 and are not required on both sides, the aligning of the bearing is simplified and thus the production and assembly of the apparatus is facilitated.

Since the reel bobbins 46, 47 have upper ends which are free and are pressed only by the springs 106, the body 101 of the reel bobbins 46, 47 is expansible in the axially upward direction when wire winding pressure is applied. In this case, it is preferable that the flanges 102, 103 be formed having a thicker width to upgrade the strength of the flanges 102, 103. Hence, when the body 101 expands axially due to the winding pressure of the wire 37 and heat deformation, an outward pressure caused by the bundle of the wire is not applied to the flanges 102, 103 in a concentrated manner. Therefore, deformation of the flanges 102, 103 is prevented, and even winding of the wire about the reel bobbins 46, 47 becomes possible. As a result, the tension of the wire 37 is stabilized during unwinding. This contributes to high precision cutting.

In addition, since the reel bobbins 46, 47 are supported so that they are oriented in the vertical direction, bending load, which is produced by the weight of the reel bobbins 46, 47 and the wire 37 and which acts on the body 101 of the reel bobbins 46, 47 in a lateral direction perpendicular to their axes, is suppressed. This maintains the body 101 in a straight cylindrical state and allows accurate winding of the wire 37. Furthermore, since the bending load acting in the lateral direction of the body 101 need not be taken into consideration, the reel bobbins 46, 47 do not require great strength as in the prior art. This allows weight reduction of the reel bobbins 46, 47.

The reel bobbins 46, 47 are easily mounted on the rotary shafts 87 through a simple procedure of lowering the reel bobbins 46, 47 so that the rods 82 extend therethrough, placing the bottom of the reel bobbins 46, 47 on the flanges 91, and fastening the double nuts 105. The removal of the reel bobbins 46, 47 from the rotary shaft 87 is performed by reversing this procedure, and is thus simple.

Furthermore, since the reel bobbins 46, 47 are supported in a manner that they are oriented vertically, the dimensions of the reel device in the lateral direction may be reduced. Additionally, since the bearings 88, 89, or load supporting devices, are required to be provided only under the reel bobbins 47, 48, it is possible to reduce the size of the entire reel device 45. Accordingly, this contributes to reducing the size of the entire wire saw.

The body 101 and the pair of flanges 102, 103 of the reel bobbins 46, 47 are formed integrally from an aluminum alloy. Accordingly, during the manufacturing process of the reel bobbins 46, 47, assembly processes, in which the body 101 and the flanges 102, 103 are assembled to each other, are not required and thus manufacturing is simplified. In addition, since the body 101 and the flanges 102, 103 are formed integrally, the strength of the entire reel bobbins 46, 47 are upgraded. This suppresses deformation of the reel bobbins 46, 47 caused when the wire 37 is wound. Therefore, the wire 37 is accurately wound about the reel bobbins 46, 47 without being disarranged. Furthermore, since the body 101 and the flanges 102, 103 are formed integrally, there is no possibility of deformation of the portions between the body 101 and the flanges 102, 103, which is caused by the wire 37 pressing into these portions, and the life of the reel bobbins 46, 47 may thus be prolonged.

Electrical Constitution

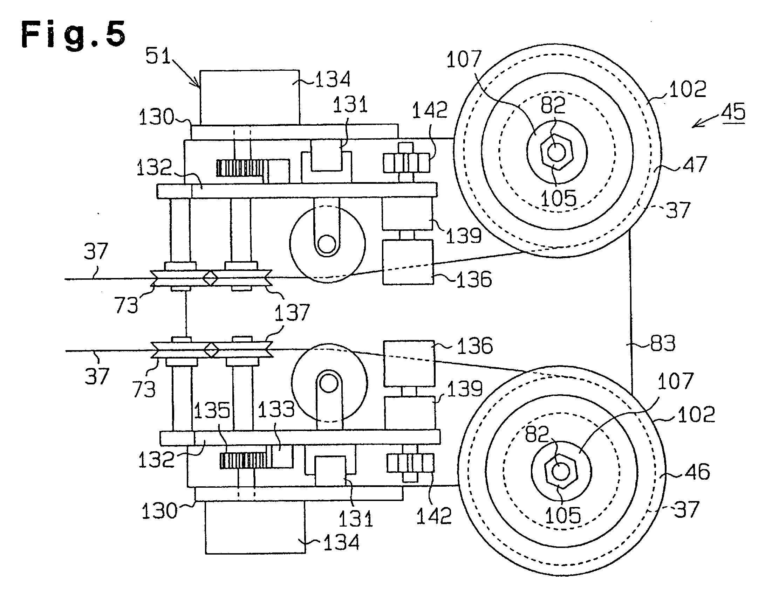

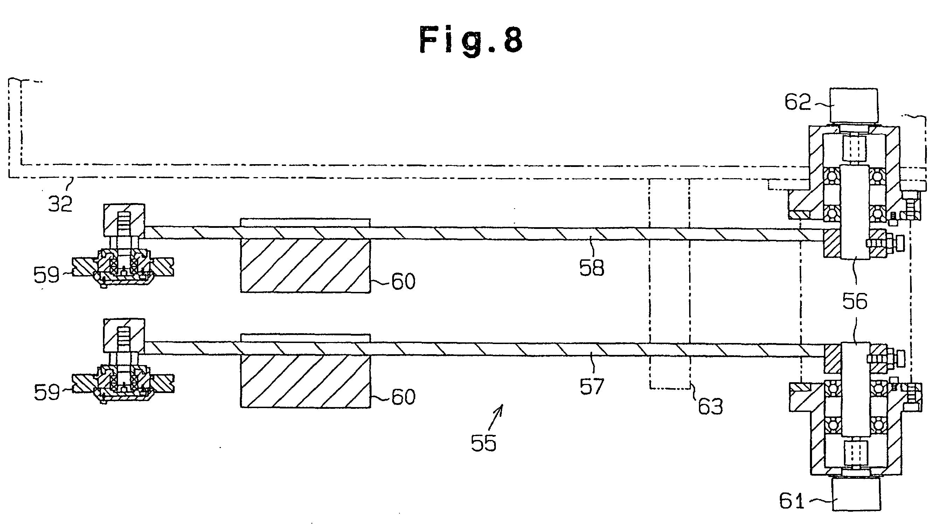

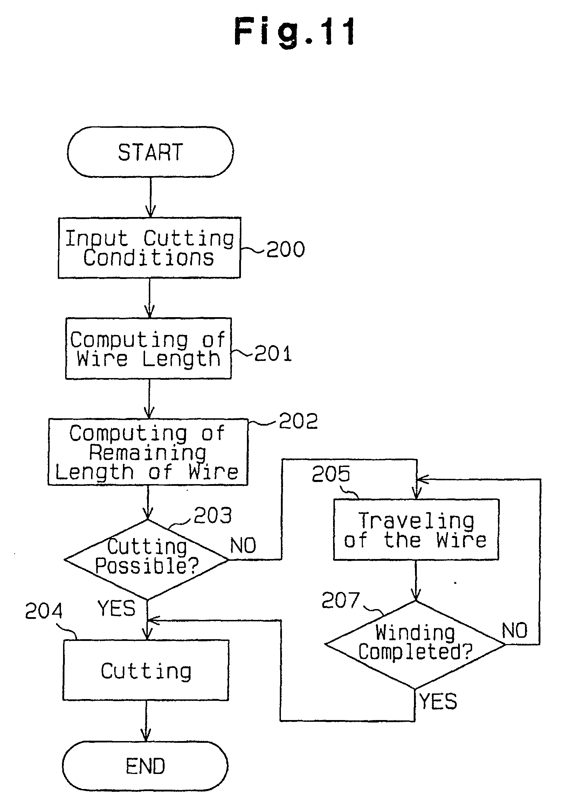

As shown in Figs. 5 and 8, a controlling device 120, located near the bed 2, is provided with a central processing unit (CPU) 121, a read-only memory (ROM) 122, and a random-access memory (RAM) 123. The CPU 121 controls the movements of the entire apparatus and also functions as a timer. The ROM 122 stores various programs to control the movements of the apparatus. The flowcharts illustrated in Figs. 11, 12, 14, 16 show the processing controlled by the CPU 121 based on the programs in the ROM 122. The RAM 123 temporarily stores various data, such as input data and detection data. A plurality of memory areas 123. are provided in the RAM 123. A keyboard 124 is arranged in front of the controlling device 120. The data input by the keyboard 124 is stored in the memory area 123. of the RAM 123.

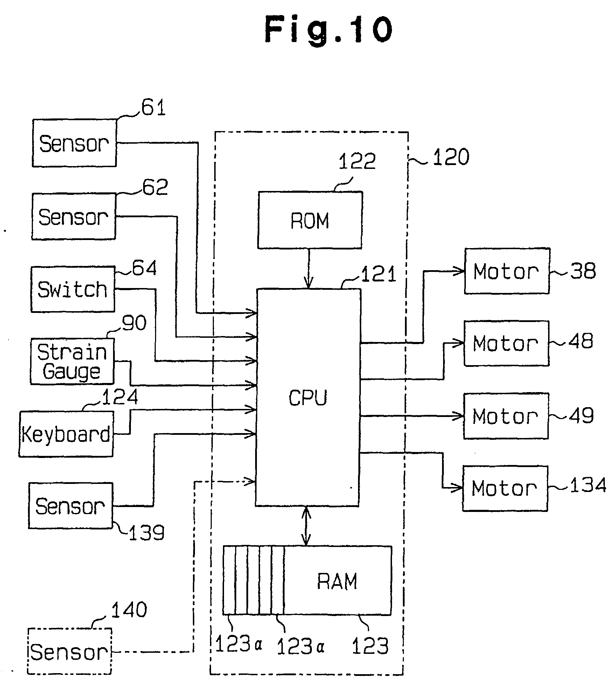

As shown in Fig. 10, the sensors 61, 62, the limit switch 64, the strain gauge 90, the keyboard 124, and the motors 38, 48, 49, 134 are linked to the CPU 121.

Processes Performed When Starting Cutting

As shown in Fig. 11, in step 200, cutting conditions, such as the type and size of the workpiece 37, the traveling velocity of the wire 37, and the winding diameter of the reel bobbins 46, 47 when starting the operation are input by an operator through the keyboard 124.

In step 201, the CPU 121 computes the length of the wire 37 that is required during the period from when cutting of the workpiece 37 is started until when the cutting is finished from various data such as the cutting speed per unit time of the workpiece 30, determined from the type, length, size, and shape of the workpiece 37, the length of time for completion of cutting determined from the cross-sectional shape of the workpiece 37, the traveling velocity of the wire 37, and the length of time for completion of cutting.

In step 202, the CPU 121 reads the detected data from the strain gauge 90 and computes the weight of the wire 37 on the reel bobbins 46, 47 from the data value.

The CPU 121 also calculates the remaining length of the wire 37 on the reel bobbins 46 and 47 that is usable for the workpiece 30 from the computed weight of the wire 37 in step 202. Accordingly, a computing device that computes the remaining length of the wire is composed of the controlling device 120, which includes the CPU 121, the strain gauge 90, etc.

In step 203, the required length of the wire 37, computed in step 201, is compared with the remaining length of the wire 37, computed in step 202. If the remaining length of the wire on the reel bobbin 46 or 47 is sufficient enough to complete cutting of the workpiece 30, in step 204, the workpiece supporting device 41 is lowered to contact the wire 37, and the wire 37 travels so as to start cutting of the workpiece 30.

However, if the remaining length of the wire on the reel bobbin 46 or 47 at the unwinding side is not sufficient to complete cutting of the workpiece 30, in steps 205, 206, the wire 37 of the first reel bobbin 46 or the second reel bobbin 47 travels without lowering the workpiece supporting device 41. After the wire 37 is completely wound about one of the reel bobbins 46 or 47, this reel bobbin 46 or 47 functions as the unwinding side and starts cutting the workpiece 30. Accordingly, a judging device, which judges whether it is possible to cut the workpiece by comparing the remaining length of the wire with the required length of the wire, is composed of the controlling device 120. The remaining length of the wire may be determined by using the stored data of the unwound length of the wire used during the previous cutting.

Thus, the workpiece 30 is cut under stable conditions without interruptions that take place during cutting when the unwinding direction of the wire is switched due to the remaining length of the wire being insufficient.

As described above, the reel bobbins 46, 47 are each supported by the rotary shafts 87 so that their axes M1, M2 are oriented in the vertical direction. This allows the weight of the reel bobbins 46, 47 to be measured by providing only a strain gauge 90, which is abutted against the bottom surface of the upper bearings 88, and thus enables simplification of the structure.

Furthermore, the strain gauge 90 does not directly contact the reel bobbins 46, 47 and the rotary shafts 87. Therefore, the measuring of the weight of the reel bobbins 46, 47 is not influenced by the rotation of the reel bobbins 46, 47 and the rotary shafts 87.

Processes Performed for Rotation Compensation

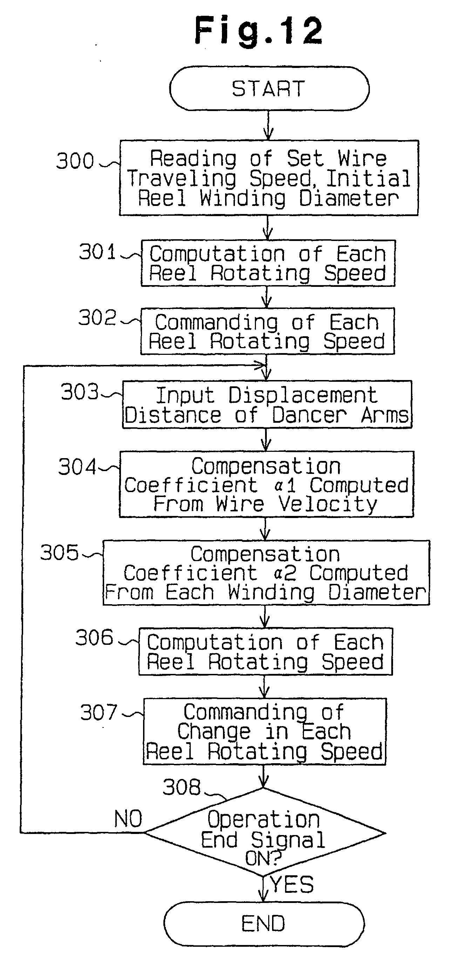

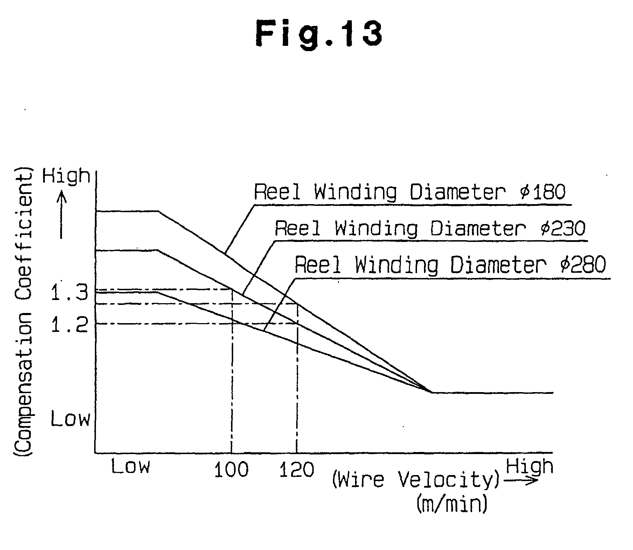

Compensation of the two reels' rotating speed in this embodiment will now be described with reference to Figs. 12 and 13.

The theoretical rotating speed of the reel bobbins 46, 47 is constantly computed from the wire traveling velocity and the winding diameter of the reel. Additionally, the CPU 121 computes the compensating amount for the upward or downward movement of the dancer arms 57, 58. In the case that there is no movement of the dancer arms 57, 58, the compensating amount is deemed to be zero, and the motors 48, 49 are rotated at the theoretical rotating speed. If movement of the dancer arms 57, 58 takes place, a compensating value is computed from the compensation coefficient, which is computed from the present wire traveling velocity and the reel winding diameter. The compensated value is added to or subtracted from the theoretical rotating speed. This suppresses the upward or downward movement of the dancer arms 57, 58 and sustains a constant wire tension.

The compensating method is simply expressed by the following equations:

$$\text{Reel Rotating Speed (N)} = \text{Theoretical Reel Rotating}$$

$$\text{Speed (N0)} \pm \text{Compensated Value (N1)}$$

$$\text{Theoretical Reel Rotating Speed (N0)} = V/\pi D$$

$$\text{Compensated Value (N1)} = (V/\pi D) \times (2L/\pi D) \times \alpha 1 \times \alpha 2 \times k$$

V represents the wire traveling velocity, D represents the reel winding diameter, 2L represents the moving distance of the wire 37 that corresponds to the upward or downward movement distance from the neutral point of the dancer arms 57, 58, $\alpha 1$ represents the compensation coefficient used to alter the reel rotating speed computed from the wire traveling velocity, $\alpha 2$ represents the compensation coefficient used to alter the reel rotating speed computed from the reel winding diameter, and k represents a constant.

The operation illustrated in the flowchart of Fig. 12 will now be described. When the operation of the wire saw is commenced, in step 300, the CPU 121 reads the data of the traveling velocity V of the wire 37 and the initial winding diameter of each reel bobbin 46, 47 from the memory area 123$\alpha$ of the RAM 123 The data is input through a keyboard 124 and stored in the memory area 123$\alpha$ of the RAM 123 In step 301, the rotating speed of the reel bobbins 46, 47 are computed from the above equations. In step 302, the CPU 121 sends commands in correspondence with the computed results to the motors 38, 48, 49.

Afterwards, in step 303, the displacement distance of the dancer arms 57, 58 are read based on the output from the sensors 61, 62.

In step 304, the compensation coefficient $\alpha 1$ based on the wire velocity is computed. In step 305, the compensation coefficient $\alpha 2$ based on each winding diameter of the reels is computed. Based on these coefficients, the rotating speed of the reel bobbins 46, 47 is computed through the above equations in step 306. In step 307, the CPU 121 sends commands in correspondence with the computed results to the motors 38, 48, 49.

As shown in Fig. 3, the wire 37 travels reciprocally while successively repeating speed increases and speed decreases to gradually advance the wire 37 in one direction. Since the wire traveling velocity is repetitively increased and decreased during operation, the data of the wire traveling velocity is also renewed simultaneously. The reel rotating speed is successively computed based on the renewed data. This is continued until an operation stop signal is output.

During cutting of the workpiece 30, predetermined tension is applied to the wire 37 between the cutting rollers 32, 33 by the weight 60 of each dancer arm 57, 58. The pivoting position of the dancer arms 57, 58 are detected by the sensors 61, 62 and input into the CPU 121. The moving distance for each dancer arm 57, 58 is determined based on this data. The change in the tension of the wire 37 is detected from the movement of the dancer arms 57, 58.

The compensating value for the rotating speed of each reel rotating motor 48, 49 is computed separately to prevent movement of the dancer arms 57, 58 caused by the alteration in the speed of the motors 38, 48, 49, which is based on the detection data from the sensors 61, 62. As shown in Fig. 13, for example, in the case that the reel diameter is 230$\Phi$ and the traveling velocity of the wire 30 is 120m/min, the compensation coefficient is 1.2. In the case that the traveling velocity of the wire 30 is 100m/min, the compensation coefficient is 1.3. If the reel diameter decreases when the wire traveling velocity is 120m/min, the compensation coefficient become slightly smaller than 1.3. The compensation coefficient is multiplied with a predetermined compensation coefficient corresponding to the pivoting distance of the dancer arms 57, 58. The rotating speed of the reel motors 48, 49 is increased or decreased based on the multiplied results.

For example, if the first reel bobbin 46 corresponds to the winding side and the tension of the wire 37 on the winding side becomes excessive, the rotating speed of the motor 48, which rotates the first reel bobbin 46, is lowered. If the second reel bobbin 47 corresponds to the unwinding side and tension of the wire 37 on the unwinding side becomes excessive, the rotating speed of the reel motor 49 for the second reel bobbin 47 is raised. When the wire traveling velocity decreases or when the reel diameter becomes smaller, the compensation coefficient becomes larger and compensation is immediately performed. Contrarily, if the wire traveling velocity is increased or if the reel diameter becomes larger, the compensation coefficient becomes smaller and the compensating amount of both reel motors 48, 49 is reduced. This suppresses hunting of the dancer arms 57, 58.

Furthermore, due to the alteration of the motor rotating speed, judgment of whether the movement of the dancer arms 57, 58 has stopped, which is based on the output from the sensors 61, 62, is performed once again. In the case that it has not stopped, the alteration is performed once more.

Accordingly, a compensating device, which alters the rotating speed of the reel motors 48, 49 in accordance with the detection data from the sensors 61, 62, is composed of the controlling device 120. An altering device, which alters the compensation coefficient for alteration of the rotating speed of the reel motors 48, 49 in accordance with the winding diameter of the reel bobbins 46, 47, is also composed of the controlling device 120. Furthermore, a first altering device, which alters the compensation coefficient for alteration of the rotating speed of the reel motors 48, 49 in accordance with the traveling velocity of the wire 37, is composed of the controlling device 120. A second altering device, which alters the same compensation coefficient in accordance with the winding diameter of the reel bobbins 46, 47, is also composed of the controlling device 120.

As described above, when the traveling velocity of the wire 37 is altered or when the winding diameter of the reel bobbins 46, 47 is varied, it is possible to compensate the rotating speed of the reel rotating motors 48, 49 immediately and accurately to end the fluctuation of the tension in the wire 37 that causes hunting. Thus, the tension of the wire 37 is always maintained at a predetermined value. This enables appropriate cutting. Additionally, since the tension fluctuation is ended immediately, it is possible for the dancer arms 57, 58 to have a shorter pivoting stroke. This contributes to the manufacturing of a compact wire saw with pivoting dancer arms 57, 58.

In addition, arbitrary setting of the data required to calculate the compensation coefficients is possible in this wire saw. This allows optimal compensation coefficients, which correspond to the cutting conditions of the type of workpiece 30, to be obtained. Therefore, an accurate wire tension is always obtained. This contributes to precision cutting of the wafers.

Processes Performed When Operation is Stopped

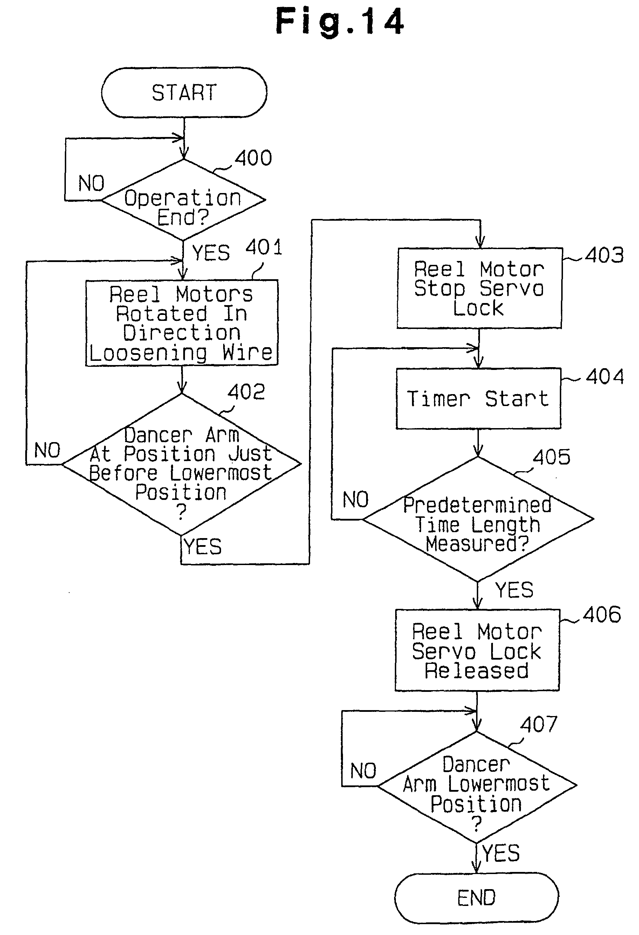

The processes which are performed when operation of the wire saw is stopped will now be described with reference to the flowchart of Fig. 14.

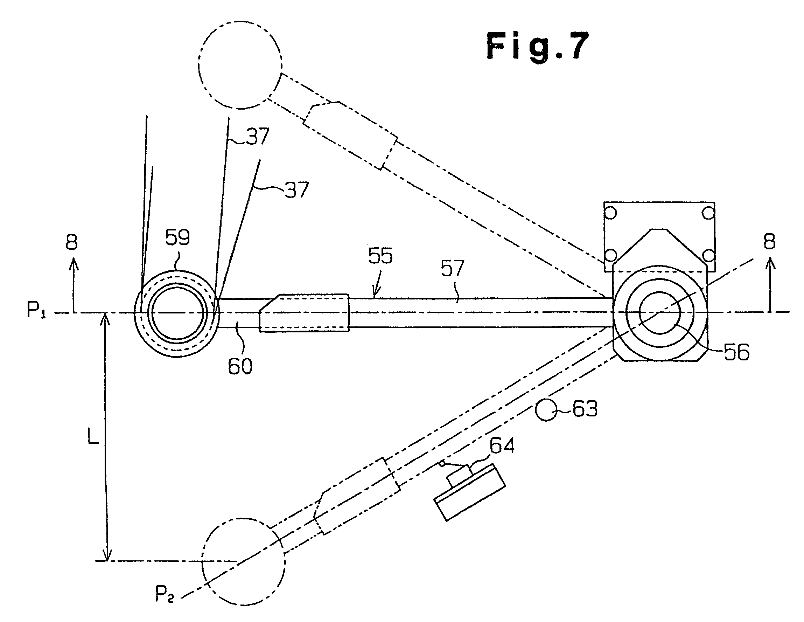

In step 400, an operation ending command is input into the CPU 121 by manipulation of the keys on the keyboard 121 or by the automatic stopping command in a program. In steps 401, 402, the reel rotating motors 48, 49 are slowly rotated in the direction that loosens the wire 37. This causes the dancer arms 57, 58 to be moved from the neutral position P1 toward the lowermost position P2, as shown in Fig. 7.

When the dancer arms 57, 58 are pivoted until they reach a predetermined position just before (a few millimeters above) the lowermost position, the reel rotating motors 48, 49 are stopped based on the detection signals of the sensors 61, 62 and braked in a servo lock state in step 403. Therefore, the dancer arms 57, 58 are stopped at the predetermined position. Accordingly, a braking device, which brakes the dancer arms 57, 58 is composed of the sensors 61, 62 and the controlling device 120.

The output from the sensors 61, 62 of the associated dancer arms 57, 58 is constantly input into the CPU 121. Thus, the position of the dancer arms 57, 58 is constantly detected. Accordingly, the CPU 121 computes the pivoting distance of the dancer arms 57, 58 from the neutral position P1 to the position just before the lowermost position P2 in correspondence with the operation ending command. Based on the computed result, the rotation of the motors 48, 49 is adjusted to unwind a required length of the wire 37.

Afterwards, in steps 404, 405, the timer starts measuring time and continues the servo lock state for a predetermined time period (1 to 2 seconds). Therefore, if vibrations, such as bounding caused by stopping of the dancer arms 57, 58, are produced in the dancer arms 57, 58, the vibrations are ended within the predetermined time period. After the timer measures the predetermined time length, in step 406, the motors 48, 49 are released from the servo lock state and become free. This enables the wire 37 to be unwound and thus slightly pivots the dancer arms 57, 58 from the position just before the lowermost position P2 to the lowermost position P2. After step 407, the dancer arms 57, 58 are stopped by the stopper 63.

As a result, excessive loosening of the wire 37 is prevented since the wire is not excessively loosened from the reel bobbins 46, 47 by the inertial rotation of the reel bobbins 46, 47 when operation of the apparatus is stopped. Hence, when operation of the wire saw is subsequently commenced, the wire 37 may smoothly travel without falling off the guide rollers 59, 71.

Since there is no excessive loosening of the wire 37 when operation is commenced, the dancer arms 57, 58 are readily returned to the neutral position P1 from the lowermost position P2 by winding the wire 37 about the reel bobbins 46, 47 for a predetermined length. Thus operation of the apparatus is commenced immediately.

Constitution of the Traversing Device

The constitution of the traversing device 51 will now be described with reference to Figs. 4 and 5.

A pair of stands 130, each of which is provided with a guide rail 131 extending vertically along its inner surface, is mounted on the frame 32 with a predetermined space in between. A pair of moving plates 132, each of which is supported by a guide rail 131, is movable in the upper and lower directions. A rack 133, extending vertically, is fixed to the outer surface of the plates 132. Each of a pair of traverse motors 134 is secured to the outer surface of one of the attaching plates 130. Each motor 134 has a pinion 135, which is meshed with the rack 133, fixed to its motor shaft.

When the traverse motors 134 are rotated, each of the moving plates 132 move in a traverse manner in the axial direction of the first reel bobbin 46 and the second reel bobbin 47 along the peripheral surface of the reel bobbins 46, 47. This causes the wire 37 to be unwound from one of the reel bobbins 46 or 47 while being traversed and wound about the remaining reel bobbin 47 or 46 while being traversed.

A pair of rotatable touch rollers 136 are arranged adjacent to each other and located one above the other with a predetermined space therebetween on each moving plate 132. The wire 37 passes through the space between the touch rollers 136. Guide rollers 137, 138 are rotatably supported by each moving plate 132 to guide the traveling of the wire 37.

Sensors 139 composed of encoders are connected to the shaft of the touch rollers 136 and detect the rotation of the touch rollers 136. If the wire 37 contacts the upper or lower roller 136 when it travels, the touch roller 136 is rotated and detected by the sensor 139. When rotation of the front touch roller 136, with respect to the traversing direction, is detected, it is judged that the traverse speed of the moving plate 132 is slow and the rotating speed of the motor 134 is thus increased. When rotation of the touch roller 136 located at the rear side with respect to the traversing direction is detected, it is judged that the traverse speed of the moving plate 132 is fast and the rotating speed of the motor 134 is thus decreased or temporarily stopped. A fin 142 is connected to the shaft of each touch roller 136 and applies a braking force to the rotation of the touch rollers 136 through its air resistance. Therefore, the touch rollers 136 are prevented. from being rotated when the wire 37 does not contact the touch rollers 136. This prevents mistaken detection by the sensors 139.

The traverser 143 is composed of various parts such as the moving plates 132, and the touch rollers 136 mounted on the moving plates 132.

The traverser 143 moves reciprocally between the ends of the body 101 of the reel bobbins 46, 47 in correspondence with the data stored in the controlling device 120 to guide the wire 37.

However, heat expansion and the winding pressure of the wire 37 causes the body 101 of the reel bobbins 46, 47 to be slightly expanded in the axial direction during operation of the wire saw. Thus, if the traverser 143 guides the wire 37 by moving reciprocally within a constant range, a gap equal to the expanded length of the body 42 of the reel bobbins 46, 47 is produced between the bundle of the wire 37 and the flanges 102, 103 of the reel bobbins 46, 47. This may cause scattering of the wire bundle.

To prevent this problem, it is required to wind the wire 37 while appropriately compensating the reciprocating distance, or the position where the traverser 143 is reversed. In the present embodiment, a compensating device, which compensates the reversing position of the traverser 143 is composed of the encoders, which serve as the sensors 139, and the controlling device 120.

Processes Performed For Compensation of Reversing Position

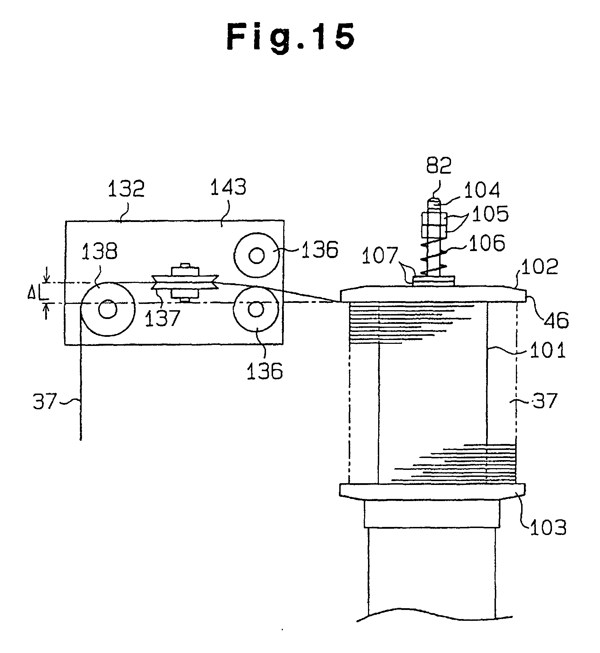

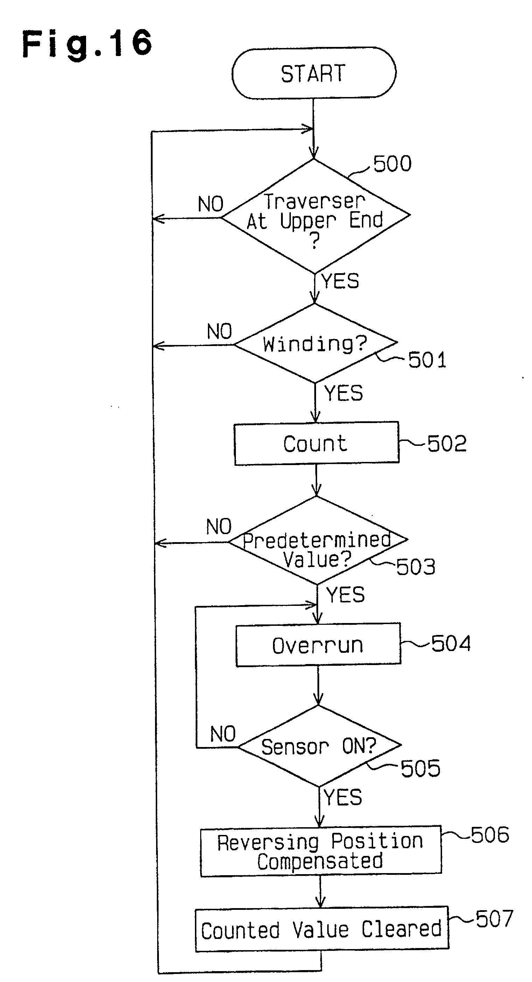

The reversing action of the traverser 143 will now be described with reference to Figs. 15 and 16.

When the traverser 143 is detected being positioned at the upper end of the reciprocating movement range in step 500, it is judged whether the wire 37 is undergoing winding in step 501. Judgement of whether the traverser 143 has reached the upper end of the movement range is performed based on an initial input data of a prestored program.

In the case that the wire 37 is undergoing winding, the number of times which the upper end is reached is counted in step 502. This data is not counted when the wire 37 is not being wound, that is, when the wire 37 is being unwound.

In step 503, it is judged whether the value counted in step 502 has reached a predetermined value. If the counted value has reached the predetermined value, for example "10", the subsequent step 504 is executed. That is, if the traverser 143 reaches the upper end of the reciprocating movement range during winding for ten times, in step 504, the traverser 143 slightly overruns the movement range as shown in Fig. 15.

Accordingly, as shown in Fig. 15, the wire 37 is extended along the inner surface of the upper flange 102 of the reel bobbins 46, 47 and then extended inclined from the outer rim of the flange 102. Thus, the wire 37 comes into contact with the touch roller 136. In step 505, the position of the traverser 143 with respect to the timing of the rotating signal, detected by the sensor 139, is memorized. When rotation is detected by the sensor 139, the movement of the traverser 143 is immediately reversed. In step 506, the subsequent upper reversing position is compensated by a predetermined distance $\Delta L$ from the position where rotation was detected to a position moved back toward the reel bobbins 46, 47.

Afterwards, in step 507, the value counted in step 502 is cleared. The processing then returns to step 500.

As described above, the upper reversing position is compensated by just having the traverser 143 overrun the upper end of the reel bobbins 46, 47, for example, once every ten rounds, and then detecting the position of the traverser 143 with the sensor 139 when the wire 37 contacts the touch roller 136 and starts rotating it.

In the present embodiment, the compensation of the reversing position is performed only at the upper side of the reel bobbins 46, 47 since the lower end of the reel bobbins 46, 47 is mounted on the flange 91 of the rotary shaft 87 and the reel bobbins 46, 47 thus expand at the upper side.

This enables the wire 37 to be wound substantially in an even manner and lowers the possibility of the wire 37 spreading when being wound.

Since the reversing position is compensated, for example, once every ten rounds, the wire 37 is not wound in a concentrated manner near the upper end of the body 101 of the reel bobbins 46, 47. It is preferable that the compensating frequency be determined by taking into consideration conditions such as the winding diameter of the reel bobbins 46, 47.

(Second Embodiment)

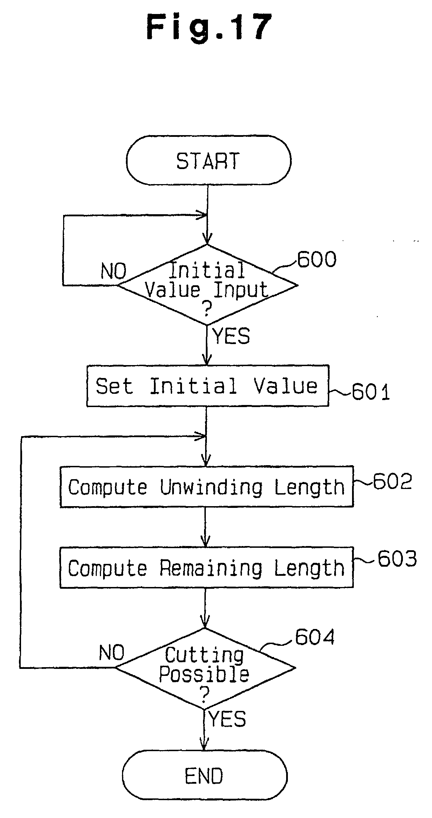

A second embodiment of the present invention will now be described with reference to Fig. 17. The flowchart shown in Fig. 17 is carried out by the CPU 121 based on the program set in the ROM 122 and the various data stored in the RAM 123 in the controlling device 120.

In the second embodiment, structure of the detecting device that detects the remaining length of the wire on the reel bobbins 46, 47 at the unwinding side differs from the first embodiment. The remaining length of the wire is detected without relying on the detection of the weight of the reel bobbins.

At steps 600, 601, the initial value of the remaining length of the wire on the reel bobbins 46, 47 is input by the keyboard 124 when replacing the reel bobbins 46, 47. In step 602, the unwinding speed, the unwinding direction, and the unwinding time (cutting time) of the wire 37 is computed from control data such as the rotating speed of the reel bobbin motors 48, 49 to further compute the unwinding length of the wire 37. In step 603, the remaining length of the wire on the reel bobbins 46, 47 is computed by subtracting the unwinding length of the wire 37 from the initial value at each point of time.

The data of the time required to cut the workpiece 37 in accordance with its type and size, or the time period from when cutting is started to when cutting is completed, is stored in the RAM 123.

At step 604, it is determined whether it is possible to perform cutting when commencing cutting based on the data in the RAM 123 and the data of the remaining length of the wire 37 on the reel bobbins 46, 47.

(Third Embodiment)

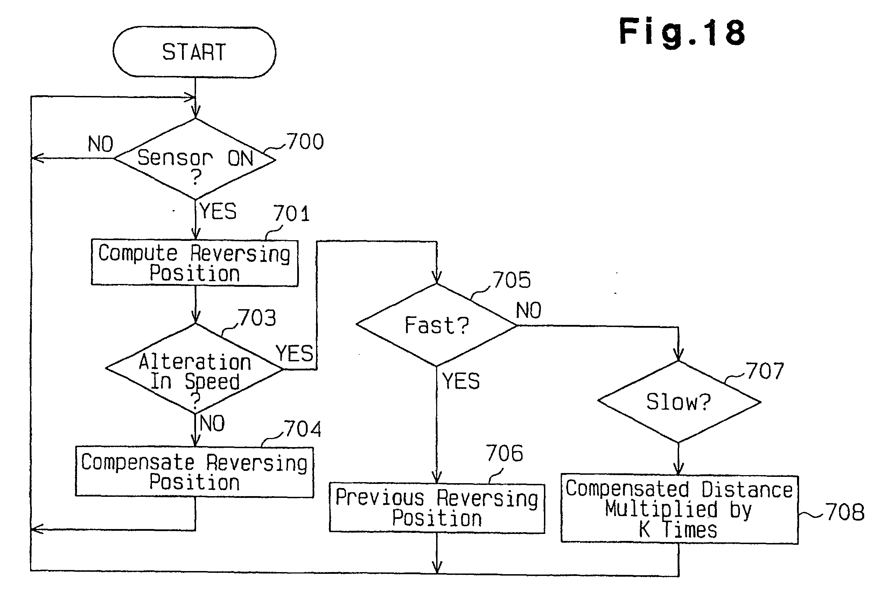

A third embodiment of the present invention according to the present invention will now be described with reference to Figs. 18 through 22 will now be described. In this embodiment, the structure of the reversing position compensating device differs from the first and second embodiments.

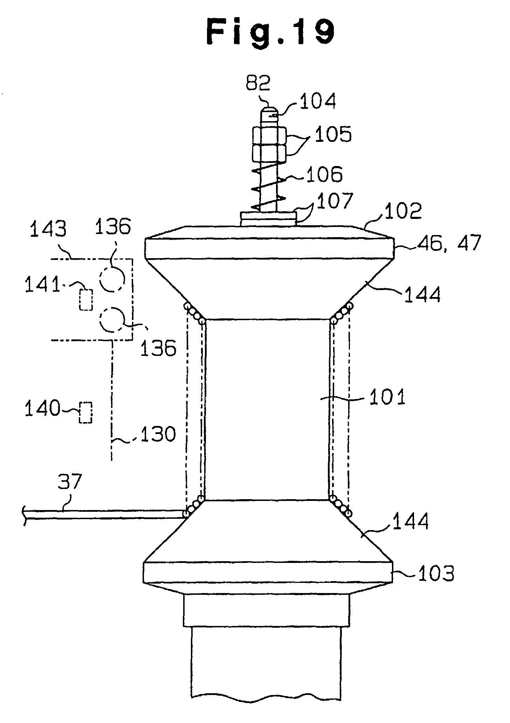

The flowchart shown in Fig. 18 is carried out by the CPU 121 based on the program set in the ROM 122 and the various data stored in the RAM 123 in the controlling device 120. In Figs. 19, 21, 22, the diameter of the wire 37 is illustrated larger than the actual diameter to facilitate understanding.

A magnetic sensor 140, serving as a position sensor, is provided on each stand 130 at a location corresponding to the middle of the reel bobbins 46, 47 in the axial direction. A magnet 141, which passes by the sensor 140, is fixed to both moving bodies 61.

The inner side of both flanges 102, 103 of the reel bobbins 46, 47 are formed in a tapered manner. Accordingly, in addition to the controlling of the normal traverse movement of the traverser 143, another type of controlling becomes necessary. In this embodiment, the angle of the tapered surface 144 of the flanges 102, 103 with respect to the reel axis is 45 degrees.

The method in which the wire 37 is wound to the tapered flanges 102, 103 in an even manner will now be described. The reciprocating movement of the traverser 143 is set so that it is symmetrical with respect to the middle of the predetermined wire winding area of the reel bobbins.

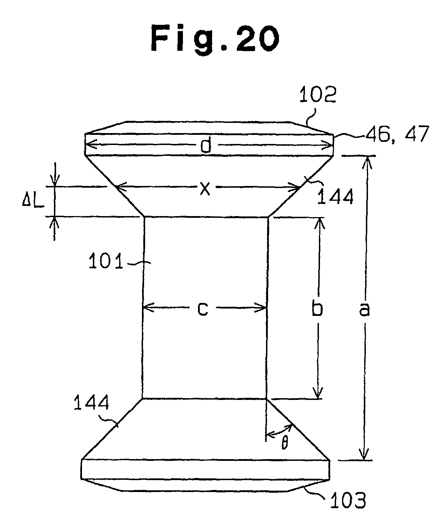

As shown in Fig. 20, the maximum winding width of the reel bobbins 46, 47 is represented by a, the minimum winding width is represented by b, the maximum shaft diameter is represented by d, and the minimum shaft diameter is represented by c.

As shown in Fig. 18, the winding of the wire 37 is first commenced, and then in step 700, it is judged whether the sensor 140 is in an activated state. When it is determined to be in an activated state, that is, when the traverser 143 is located at the substantially middle section of the wire winding area, the reversing position compensating distance $\Delta L$ is computed in accordance with the present winding diameter x in step 701. The traverse compensating distance is expressed in the following equation, which corresponds to Fig. 20:

$$\Delta L=(x-c)/2\cdot\tan\theta$$

Theta ($\theta$) represents the angle defined by the tapered surface 144 and the reel axis.

In this embodiment, since $\theta=45°$, $\Delta L=(x-c)/2$.

That is to say, due to the winding diameter x being equal to the minimum winding diameter when winding is started, $\Delta L$ is zero. Accordingly, compensation of the reversing position is not conducted and reciprocation is thus performed between the reel bobbin's minimum winding width, which is an initial value. The winding diameter x is computed from, for example, the program data related to the rotating speed of the reel bobbins and the signals from the sensors 61, 62 of the associated dancer arms 57, 58. When the winding diameter becomes equal to or larger than a predetermined value, the reversing positions of the traverser 143 are each compensated toward the ends of the reel bobbins by adding $\Delta L=(x-c)/2$, or half of the increased winding diameter.

In this manner, when the winding diameter at the ends of the reel bobbins 46, 47 coincides with the winding diameter at the middle of the traverse movement, the reversing position of the traverser 143 are each extended from the ends of the body 101 toward the ends of the reel bobbin by $\Delta L$ in accordance with the increasing rate of the tapered surface 144. Thus, the wire 37 is wound along the tapered surface 144 of the flanges 102, 103.

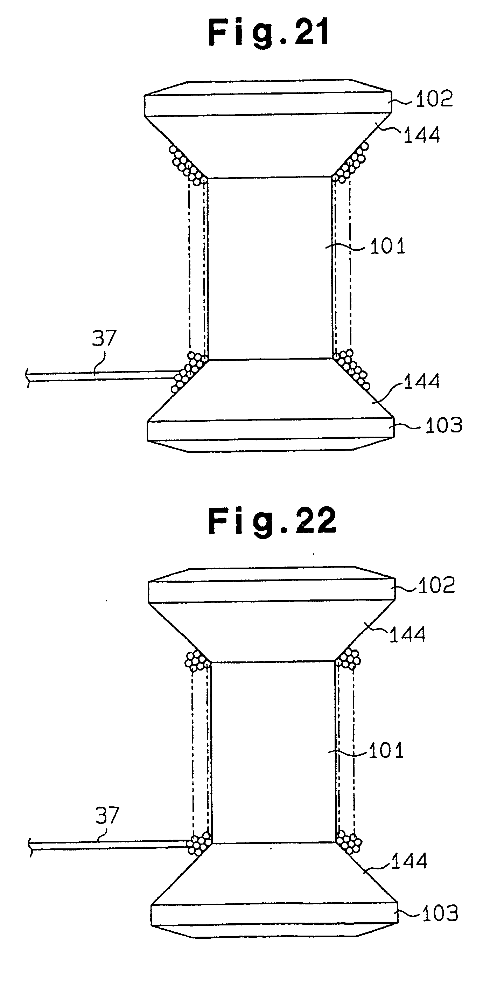

In step 703, it is judged whether there is alteration in the unwinding speed of the wire 37, produced by the rotation of the reel bobbins 46, 47. In other words, the winding diameter at the vicinity of the ends of the body 101 and at the vicinity of its middle section, which are altered due to the pivoting of the dancer arms 57, 58, are compared. The form of the winding near the tapered surface 144 becomes uneven. Thus, as shown in Figs. 21 and 22, the wire may stick out from the bundle or fall into the bundle along the tapered surface 144. This effects and thus alters the traveling velocity and tension of the wire during cutting.

Normally, when the wire 6 is wound in an even manner as shown in Fig. 19, unwinding and winding is performed while the reversing position of the traverser 143 is gradually compensated in step 704.

However, when the traveling velocity of the wire becomes fast in step 705, fluctuation of the wire tension, caused by the displacement of the dancer arms 57, 58, is detected, the wire near the tapered surface 144 sticks out as shown in Fig. 21, and the winding diameter at the winding end thus becomes larger than the winding diameter at the middle section. Then, in step 706, the normal compensation of the reversing position, or the extension of the reversed position, is stopped. Thus, the wire 37 is wound by reversing the traverse at a reversing position which is the same as the previous reversing position. This enables the form of the winding to be returned to the even state as shown in Fig. 19. When the form of the winding is recovered and the two diameters described above become equal, the movement of the traverser 143 is returned to normal and the wire 37 is wound by performing the normal reversing position compensation.

Contrarily, when the traveling velocity of the wire becomes slow in step 707, fluctuation of the wire tension, caused by the displacement of the dancer arms 57, 58, is detected, the wire near the tapered surface 144 falls into the bundle along the tapered surface 144 as shown in Fig. 22, and the winding diameter at the winding end thus becomes smaller than the winding diameter at the middle section. Then in step 708, the extending distance $\Delta L$ of the normal reversed position compensation is further increased. For example, the extended distance may be multiplied by K times. By winding the wire 37 in this state through the reciprocating traversing, the winding form is returned to the even state as shown in Fig. 19. When the form of the winding is recovered and the two diameters described above become equal, the movement of the traverser 143 is returned to normal and the wire 37 is wound by performing the normal reversing position compensation. Accordingly, a winding shape compensating device is composed of the controlling device 120, the magnetic sensor 140, the magnet 141, etc.

Since the wire 37 is wound about the reel bobbins 46, 47 by repeating the sequential processes, the winding shape of the wire 37 is readily compensated regardless of the winding form becoming uneven, and the wire 37 is thus wound about the tapered surface 144 in an even manner like the body 101.

In the third embodiment, the flanges 102, 103 of both reel bobbins 46, 47 are formed in a tapered manner. Therefore, the strength of the flanges 102, 103 is upgraded and the winding pressure is dispersed by the tapered surface 144. Thus, the possibility of the tension of the wire 37 causing deformation of the flanges 102, 103 is small.

Although several embodiments of the present invention have been described herein, it should be apparent to those skilled in the art that the present invention may be embodied in many other specific forms without departing from the scope of the invention. For example, the angle $\theta$ of the tapered surface 144 may be changed to an angle that differs from the above embodiment. The tapered surface may be formed on only the upper flange 102 instead of both flanges 102, 103. In the above constitution, two rollers 33, 34 were used. However, more than three rollers may be used.

**Claims**

1. A wire saw including a pair of reel bobbins (46, 47), wherein each reel bobbin (46, 47) is supported by a rotary shaft (87) in a manner such that its axis is oriented in a vertical direction, wherein a strand of wire (37) unwound from one of the reel bobbins (46, 47) is wound about a plurality of cutting rollers (33, 34), which constitute a cutting device (31), and is simultaneously wound about the other reel bobbin while rotating the cutting rollers (33, 34) to cause the wire (37) to travel, wherein a cutting feed is applied to the wire (37) and a workpiece (30) in this state to cut the workpiece (30), the wire saw comprising:

   reel motors (48, 49), which rotate the associated reel bobbins (46, 47);
   a sensor (61, 62), which detects the tension fluctuation of the wire (37); and
   a compensating device (120), which alters the rotating speed of the reel motors (48, 49) in correspondence with the detection data of the sensor (61, 62), the wire saw being **characterized by**
   an altering device (120), which alters a compensation coefficient for alteration of the rotating speed of the reel motors (48, 49) in correspondence with the winding diameter of the reel bobbins (46, 47).

2. The wire saw according to claim 1, wherein the altering device is a first altering device, wherein the wire saw further comprises a second altering device (120), which alters the compensation coefficient in correspondence with the traveling velocity of the wire (37).

3. The wire saw according to claim 1 or 2 comprising a displacement member (57, 58), which is displaced in accordance with the tension fluctuation of the wire (37), wherein the sensor (61, 62) detects the position of the displacement member (57, 58), which is indicative of the tension of the wire (37).

4. The wire saw according to claim 3 comprising a braking device (61, 62, 120), which temporarily sustains the rotation of the reel bobbins (46, 47) at a braked state when the sensor (61, 62) detects the displacement member (57, 58) moved to a predetermined position just before a lowermost position, wherein the displacement member (57, 58) is moved to and stopped at the lowermost position by releasing the braking of the braking device (61, 62, 120).

5. The wire saw according to claim 3 or 4, wherein the displacement member is a dancer arm (57, 58) of a tension applying device (55) for applying a predetermined tension to the wire (37), wherein the dancer arm (57, 58) is provided with a weight (60) for application of the tension.

6. The wire saw according to any one of claims 1 to 5 comprising an input device (124), which inputs the data used for computing the compensation coefficient.

7. The wire saw according to any one of claims 1 to 6 comprising a computing device (120), which computes the remaining length of the wire (37) wound about the reel bobbin on the unwinding side.

8. The wire saw according to claim 7, wherein said computing device (120) computes the remaining length of the wire (37) on the unwinding side reel bobbin from the remaining length of the wire (37) on the unwinding side reel bobbin when cutting is started, and data of the unwinding speed of the wire (37) and the cutting time.

9. The wire saw according to claim 8, wherein the computing device (120) computes the unwound length of the wire (37) that is required for cutting of the workpiece (30) based on the data of the unwinding speed of the wire (37) and the cutting time, and wherein the computing device (120) estimates the remaining length of the wire (37) when cutting is completed by subtracting the unwound length of the wire (37) from the remaining length of the wire (37) when cutting is started.

10. The wire saw according to claim 7, wherein the computing device (120) computes the remaining length of the wire (37) from the output of a weight sensor (90), which detects the weight of the unwinding side reel bobbin.

11. The wire saw according to claim 10, wherein said weight sensor is composed of a strain gauge (90).

12. The wire saw according to claim 11, wherein said strain gauge (90) detects the weight of the reel bobbin by way of a bearing (88), which support the rotary shaft (87) of said reel bobbin.

13. The wire saw according to any one of claims 7 to 12 comprising a judging device (120), which judges whether the workpiece (30) may be cut by comparing the remaining length of the wire (37) with the length of the wire (37) required during the period from when cutting of the workpiece (30) is started to when cutting is completed.

14. The wire saw according to any one of claims 1 to 6 comprising a traverser (143), which guides the unwinding of the wire (37) to evenly wind the wire (37) about the reel bobbins (46, 47) or to unwind the wire (37) from the reel bobbin, and a reversing position compensating device (120, 139), which compensates a reversing position of the traverser (143).

15. The wire saw according to claim 14, wherein the reversing position compensating device (120, 139) is provided with a sensor (139) for detection of the position of the traverser (143), and wherein the reversing position compensating device (120, 139) moves the traverser (143) in a manner overrunning the winding end of said reel bobbins (46, 47) once every predetermined number of reciprocation and computes and compensates the renewed reversing position.

16. The wire saw according to any one of claims 1 to 6, wherein each rotary shaft (87) has a flange (91) on which the associated reel bobbin (46, 47) is mounted, and wherein each reel bobbin (46, 47) is urged toward the associated flange (91) by an elastic member (106).

17. The wire saw according to any one of claims 1 to 6, wherein at least the winding side reel bobbin among the two reel bobbins (46, 47) has a flange (91), wherein the peripheral surface of the winding side of the flange (91) is formed in a tapered manner.

18. The wire saw according to claim 17 comprising a traverser (143) to evenly wind the wire (37) about the reel bobbins (46, 47) and a reversing position compensating device (120, 139) to compensate the reversing position of the traverser (143).

19. The wire saw according to claim 18, wherein the reversing position compensating device (120, 139) gradually moves the reversing position of the traverser (143) toward the end of the reel bobbins (46, 47) in accordance with the increasing rate of the tapered section of the reel bobbins (46, 47).

20. The wire saw according to claim 17 comprising a winding shape compensating device (120, 140, 141) used when the winding shape of the wire (37) becomes uneven.

21. The wire saw according to claim 20, wherein said winding shape compensating device (120, 140, 141) compares the winding diameter in the vicinity of the middle of the predetermined winding area of the reel bobbin (46, 47) with the winding diameter at the end of the reel bobbin (46, 47), wherein the reversing position at the end is not altered when the winding diameter at the end is larger, wherein the reversing position is moved toward the end of the reel bobbin (46, 47) for a relatively large distance when the winding diameter at the end is smaller, and wherein the reversing position is gradually moved toward the end of the reel bobbin (46, 47) in accordance with the increasing rate of the tapered section of the reel bobbin (46, 47) when the two diameters are equal.

**Patentansprüche**

1. Drahtsage mit einem Paar von Wickelspulen (46, 47), bei welcher jede Wickelspule (46, 47) von einer drehbaren Welle (87) gestützt Draht (37) ist, derart, dass ihre Achse in vertikaler Richtung orientiert ist, wobei ein Draht (37), der von einer der Wickelspulen (46, 47) abgewickelt wurde um mehrere Schneidwalzen (33, 34) gewickelt ist, die eine Schneidvorrichtung (31) bilden, und gleichzeitig auf die andere Wickelspule gewickelt wird, während die Schneidwalzen (33, 34) rotieren und den Draht (37) vorwärts bewegt, wobei der Draht (37) eine Schneidbewegung erfährt und mit einem Werkstück (30) in der Lage, in der das Werkstück (30) geschnitten werden soil, wobei die Drahtsäge umfasst:

Wickelmotoren (48, 49), die in Verbindung mit den Wickelspulen (46, 47) drehen; einen Sensor (61, 62) der die Schwankungen des Drahts (37) erfasst; und
eine Ausgleichsvorrichtung (120), welche die Drehgeschwindigkeit der Wickelmotoren (48, 49) entsprechend den erfassten Daten des Sensors (61, 62) verändert, wobei die Drahtsäge **gekennzeichnet ist durch** eine Einrichtung (120) zum Verändern, welche einen Ausleichskoeffizienten zum Verändern der Drehgeschwindigkeit der Wickelmotoren (48, 49) in Abhängigkeit vom Wickeldurchmesser der Wickelspulen (46, 47) verändert.

2. Drahtsäge nach Anspruch 1, mit einer ersten Einrichtung (120)zum Verändern und mit einer zweiten Einrichtung zum Verändern welche den Ausgleichskoeffizienten in Abhängigkeit von der Geschwindigkeit des Drahts (37) ändert.

3. Drahtsage nach Anspruch 1 oder 2, mit einem Element (57, 58) zum Verschieben, welches in Abhängigkeit von der Veränderung der Spannung des Drahts (37) verschoben wird, wobei der Sensor (61, 62) die Position des Elements (57, 58) zum Verschieben überwacht, welche für die Spannung des Drahts (37) repräsentativ ist.

4. Drahtsäge nach Anspruch 3 mit einer Bremsvorrichtung (61, 62, 120) welche zeitweise die Drehung der Wickelspulen (46, 47) unterstützt im gebremsten Zustand, wenn der Sensor (61, 62) feststellt, dass das Element zum Verschieben in eine vorbestimmte Lage, gerade vor einer tiefsten Lage gelangt, wobei das Element (57, 58) zum Verschieben in die tiefste Lage bewegt und dort angehalten wird, indem die Bremsvorrichtung (61, 62, 120) losgelassen wird.

5. Drahtsäge nach Anspruch 3 oder 4, bei welcher das Element zum Verschieben ein Tänzerarm (57, 58) einer Vorrichtung (55) zum Erzeugen von Spannung ist, wobei am Tänzerarm (57, 58) ein Gewicht (60) angebracht ist um Spannung zu erzeugen.

6. Drahtsäge nach einem der Ansprüche 1 bis 5 mit einer Eingabeeinheit (124) in welche die Daten für das Berechnen des Ausgleichskoeffizienten eingegeben werden.

7. Drahtsäge nach einem der Ansprüche 1 bis 6, mit einem Rechner (120) der die Länge des Drahts (37) auf der Wickelspule auf der Abwickelseite berechnet.

8. Drahtsäge nach Anspruch 7, bei welchem die Rechenvorrichtung (120) die verbleibende Länge des Drahts (37) auf der Wickelspule der Abwickelseite aus der verbleibenden Länge des Drahts (37) auf der Wickelspule der Abwickelseite, beim Starten des Schneidvorgangs und Daten der Abwickelgeschwindigkeit des Drahts (37) und der Zeit während der geschnitten wird berechnet.

9. Drahtsäge nach Anspruch 8, bei welcher die Rechenvorrichtung (120) die abgewickelte Länge des Drahts (37) die für das Schneiden eines Werkstücks (30) benötigt wird berechnet aus den Daten der Abwickelgeschwindigkeit des Drahts (37) und der Zeit für das Schneiden, und bei welcher die Rechenvorrichtung (120) die verbleibende Länge Draht (37) berechnet, wenn der Schneidvorgang beendet ist indem die abgewickelte Länge Draht (37) von der Länge des Drahts (37) beim Beginn des Schneidvorgangs subtrahiert.

10. Drahtsäge nach Anspruch 7, bei welcher die Rechenvorrichtung (120) die verbleibende Länge des Drahts (37) aus den Ausgangsdaten eines Gewichtssensors (90) berechnet, der das Gewicht der Wickelspule auf der Abwikkelseite bestimmt.

11. Drahtsäge nach Anspruch 10, bei welcher der Gewichtssensor ein Dehnungsmesser ist.

12. Drahtsäge nach Anspruch 11, bei welcher der Dehnungsmesser (90) das Gewicht der Wickelspule über ein Lager (88) misst, das die Drehwelle der Wickelspule trägt.

13. Drahtsäge nach einem der Ansprüche 7 bis 12, mit einer Prüfeinrichtung (120), die prüft ob das Werkstück (30) geschnitten werden kann, indem die verbleibende Länge des Drahts (37) mit der für das Schneiden vom Zeitpunkt des Beginns des Schneidens bis zum Beenden des Schneidens benötigten Länge des Drahts verglichen wird.

14. Drahtsäge nach einem der Ansprüche 1 bis 6, mit einer Fahrbühne (143) welche das Abwickeln des Drahts (37) führt um den Draht (37) gleichmässig auf die Wickelspule (46, 47) zu wickeln oder den Draht von der Wickelspule zu wickeln, und mit einer Einrichtung (120, 139) mit einer Umkehrposition zum Kompensieren einer Umkehrposition der Fahrbühne (143).

15. Drahtsäge nach Anspruch 14, bei welcher die Einrichtung (120 139) zum Kompensieren und mit einer Umkehrposition, und einem Sensor (139) zum Bestimmen der Lage der Fahrbühne (143) aufweist und bei der die Einrichtung (120, 139) zum Kompensieren der Umkehrposition, die Fahrbühne (143) nach einer vorbestimmten Zahl von Umkehrungen über das Wickelende der Wickelspulen (46, 47) hinaus läuft und die neue Umkehrposition berechnet und die neue Umkehrposition kompensiert.

**16.** Drahtsäge nach einem der Ansprüche 1 bis 6 bei welcher jede Drehwelle (87) einen Flansch (91) aufweist, auf welchem die Wickelspule (46. 47) montiert ist, und bei welcher jede Wickelspule (46, 47) mit einem elastischen Element (106) gegen den zugehörigen Flansch (91)gedrückt wird.

**17.** Drahtsäge nach einem der Ansprüche 1 bis 6, bei welcher wenigstens diejenige der Wickelspulen (46, 47) auf welche aufgewickelt wird einen Flansch (91) aufweist und die äussere Oberfläche der Wickelseite des Flansches (91) konisch geformt ist.

**18.** Drahtsäge nach Anspruch 17, mit einer Fahrbühne (143) zum gleichmässigen Wickeln des Drahts (37) um die Wickelspulen und mit einer Einrichtung (120, 139) mit einer Umkehrposition zum Kompensieren der Umkehrposition der Fahrbühne (143).

**19.** Drahtsäge nach Anspruch 18, bei welcher die Umkehrposition der Einrichtung (120, 139) zum Kompensieren die Umkehrposition der Fahrbühne (147) nach und nach gegen das Ende der Wickelspulen (46, 47) bewegt, dies in Übereinstimmung mit dem zunehmenden konischen Teil der Wickelspulen (46, 47).

**20.** Drahtsäge nach Anspruch 17, mit einer Einrichtung (120, 140, 141) zum Kompensieren der Form der Wicklung, welche gebraucht wird wenn die Form der Wicklung des Drahts (37) ungleichmässig wird.

**21.** Drahtsäge nach Anspruch 20, bei welcher die Einrichtung (120, 140, 141) zum Kompensieren der Form der Wicklung den Durchmesser der Wicklung in der Umgebung der Mitte des vorbestimmten Wickelbereichs der Wickelspulen (46, 47) mit dem Durchmesser der Wicklung am Ende der Wickelspule (46, 47) vergleicht, wobei die Umkehrposition am Ende nicht geändert wird, wenn der Durchmesser der Wicklung am Ende grösser ist, und bei welcher die Umkehrposition um eine relativ grosse Distanz gegen das Ende der Wickelspule (46, 47) verschoben wird, wenn der Durchmesser der Wicklung am Ende kleiner ist, und bei welcher die Umkehrposition nach und nach gegen das Ende der Wickelspule (46, 47) in Übereinstimmung mit der Zunahme des konischen Teils der Wickelspulen (46, 47), wenn die beiden Durchmesser gleich sind.

**Revendications**

**1.** Scie à fil incluant une paire de bobines (46, 47), dans laquelle chaque bobine (46, 47) est supportée par un arbre rotatif (87) d'une manière telle que son axe est orienté dans une direction verticale, dans laquelle un toron de fil (37) déroulé d'une des bobines (46, 47) est enroulé autour d'une pluralité de rouleaux de découpe (33, 34), qui constituent un dispositif de découpe (31), et il est enroulé simultanément autour de l'autre bobine tout en faisant tourner les rouleaux de découpe (33, 34) pour faire bouger le fil (37), dans laquelle une alimentation de découpe est appliquée au fil (37) et une pièce à travailler (30) dans cet état pour couper la pièce à travailler (30), la scie à fil comprenant:

des moteurs de bobine (48, 49), qui font tourner les bobines associées (46, 47);
un capteur (61, 62) qui détecte la fluctuation de tension du fil (37); et
un dispositif compensateur (120), qui modifie la vitesse de rotation des moteurs de bobine (48, 49) en correspondance avec les données de détection du capteur (61, 62), la scie à fil étant **caractérisée par**:

un dispositif modificateur (120), qui modifie un coefficient de compensation pour changer la vitesse de rotation des moteurs de bobine (48, 49) en correspondance avec le diamètre d'enroulement des bobines (46, 47).

**2.** Scie à fil suivant la revendication 1, dans laquelle le dispositif modificateur est un premier dispositif modificateur, dans laquelle la scie à fil comprend en outre un deuxième dispositif modificateur (120), qui modifie le coefficient de compensation en correspondance avec la vitesse de déplacement du fil (37).

**3.** Scie à fil suivant la revendication 1 ou 2, comprenant un élément de déplacement (57, 58), qui est déplacé conformément à la fluctuation de tension du fil (37), dans laquelle le capteur (61, 62) détecte la position de l'élément de déplacement (57, 58), qui est une indication de la tension du fil (37).

**4.** Scie à fil suivant la revendication 3, comprenant un dispositif de freinage (61, 62, 120), qui retient temporairement la rotation des bobines (46, 47) à un état freiné lorsque le capteur (61, 62) détecte que l'élément de déplacement (57, 58) a bougé jusqu'à une position prédéterminée juste avant la position la plus basse, dans laquelle l'élément de déplacement (57, 58) est déplacé vers et stoppé à la position la plus basse par un relâchement du freinage du dispositif de freinage (61, 62, 120).

**5.** Scie à fil suivant la revendication 3 ou 4, dans laquelle l'élément de déplacement est un bras danseur (57, 58) d'un dispositif appliquant une tension (55) pour appliquer une tension prédéterminée au fil (37), dans laquelle le bras danseur (57, 58) est muni d'un poids (60) pour l'application de la tension.

**6.** Scie à fil suivant l'une quelconque des revendications 1 à 5, comprenant un dispositif d'entrée (124), qui entre les données utilisées pour calculer le coefficient de compensation.

**7.** Scie à fil suivant l'une quelconque des revendications 1 à 6, comprenant un dispositif de calcul (120), qui calcule la longueur restante du fil (37) enroulé autour de la bobine du côté déroulement.

**8.** Scie à fil suivant la revendication 7, dans laquelle ledit dispositif de calcul (120) calcule la longueur restante du fil (37) sur la bobine du côté déroulement, à partir de la longueur restante du fil (37) sur la bobine du côté déroulement lorsque la découpe est commencée, et les données de la vitesse de déroulement du fil (37) et le temps de découpe.

**9.** Scie à fil suivant la revendication 8, dans laquelle le dispositif de calcul (120) calcule la longueur déroulée du fil (37) qui est requise pour découper la pièce à travailler (30) sur la base des données de la vitesse de déroulement du fil (37) et du temps de découpe, et dans laquelle le dispositif de calcul (120) estime la longueur restante du fil (37) lorsque la découpe est terminée en soustrayant la longueur déroulée du fil (37) à la longueur restante du fil (37) au début de la découpe.

**10.** Scie à fil suivant la revendication 7, dans laquelle le dispositif de calcul (120) calcule la longueur restante du fil (37) à partir de la sortie d'un capteur de poids (90), qui détecte le poids de la bobine du côté déroulement.

**11.** Scie à fil suivant la revendication 10, dans laquelle ledit capteur de poids est composé d'une jauge de contrainte (90).

**12.** Scie à fil suivant la revendication 11, dans laquelle ladite jauge de contrainte (90) détecte le poids de la bobine au moyen d'un support (88), qui supporte l'arbre rotatif (87) de ladite bobine.

**13.** Scie à fil suivant l'une quelconque des revendications 7 à 12, comprenant un dispositif d'appréciation (120), qui juge si la pièce à travailler (30) peut être coupée en comparant la longueur restante du fil (37) avec la longueur du fil (37) requise durant la période entre le début de découpe de la pièce à travailler (30) et la fin de découpe.

**14.** Scie à fil suivant l'une quelconque des revendications 1 à 6, comprenant un dispositif de guidage (143), qui guide le déroulement du fil (37) pour enrouler régulièrement le fil (37) autour des bobines (46, 47) ou pour dérouler le fil (37) à partir de la bobine, et un dispositif compensateur de position de retour (120, 139), qui compense une position de retour du dispositif de guidage (143).

**15.** Scie à fil suivant la revendication 14, dans laquelle le dispositif compensateur de position de retour (120, 139) est muni d'un capteur (139) pour détecter la position du dispositif de guidage (143), et dans laquelle le dispositif compensateur de position de retour (120, 139) déplace le dispositif de guidage (143) de manière à dépasser l'extrémité d'enroulement desdites bobines (46, 47) une fois à chaque nombre prédéterminé de retour et calcule et compense la position de retour renouvelée.

**16.** Scie à fil suivant l'une quelconque des revendications 1 à 6, dans laquelle chaque arbre rotatif (87) possède une bride (91) sur laquelle la bobine associée (46, 47) est montée, et dans laquelle chaque bobine (46, 47) est pressée vers la bride associée (91) par un élément élastique (106).

**17.** Scie à fil suivant l'une quelconque des revendications 1 à 6, dans laquelle au moins la bobine du côté enroulement parmi les deux bobines (46, 47) possède une bride (91), dans laquelle la surface périphérique du côté enroulement de la bride (91) est formée d'une manière conique.

**18.** Scie à fil suivant la revendication 17, comprenant un dispositif de guidage (143) pour enrouler régulièrement le fil (37) autour des bobines (46, 47) et un dispositif compensateur de position de retour (120, 139) pour compenser la position de retour du dispositif de guidage (143).

19. Scie à fil suivant la revendication 18, dans laquelle le dispositif compensateur de position de retour (120, 139) déplace par paliers la position de retour du dispositif de guidage (143) vers l'extrémité des bobines (46, 47) conformément à la vitesse croissante de la section conique des bobines (46, 47).

20. Scie à fil suivant la revendication 17, comprenant un dispositif compensateur de forme d'enroulement (120, 140, 141) utilisé lorsque la forme d'enroulement du fil (37) devient irrégulière.

21. Scie à fil suivant la revendication 20, dans laquelle ledit dispositif compensateur de forme d'enroulement (120, 140, 141) compare le diamètre d'enroulement au voisinage du milieu de la surface d'enroulement prédéterminée de la bobine (46, 47) avec le diamètre d'enroulement à l'extrémité de la bobine (46, 47), dans laquelle la position de retour à l'extrémité n'est pas modifiée lorsque le diamètre d'enroulement à l'extrémité est plus grand, dans laquelle la position de retour est déplacée vers l'extrémité de la bobine (46, 47) d'une distance relativement élevée lorsque le diamètre d'enroulement à l'extrémité est plus petit, et dans laquelle la position de retour est déplacée par paliers vers l'extrémité de la bobine (46, 47) conformément à la vitesse croissante de la section conique de la bobine (46, 47) lorsque les deux diamètres sont égaux.

# Fig.1

EP 1 068 920 B1

Fig.2

Fig.3

# Fig.4

# Fig.5

EP 1 068 920 B1

# Fig.6

Fig.7

# Fig.8

EP 1 068 920 B1

# Fig.9

# Fig.10

# Fig.11

```
        ┌──────────┐
        │  START   │
        └────┬─────┘
             ↓
    ┌─────────────────┐
    │  Input Cutting  │──── 200
    │   Conditions    │
    └────────┬────────┘
             ↓
    ┌─────────────────┐
    │  Computing of   │──── 201
    │  Wire Length    │
    └────────┬────────┘
             ↓                    ┌──── 202
    ┌─────────────────┐
    │  Computing of   │
    │    Remaining    │
    │ Length of Wire  │          205 ─┐
    └────────┬────────┘          ┌──────────────┐
             ↓  ┌── 203          │  Traveling   │
           ◇                     │ of the Wire  │
        Cutting      NO          └──────┬───────┘
        Possible? ──────────            ↓
           ◇                   207 ─┐
   204 ─┐   │ YES                   ◇
        │   ↓                    Winding      NO
    ┌─────────────┐             Completed? ──────
    │   Cutting   │                ◇
    └──────┬──────┘                │ YES
           ↓
     ┌──────────┐
     │   END    │
     └──────────┘
```

# Fig.12

START

300 — Reading of Set Wire Traveling Speed, Initial Reel Winding Diameter

301 — Computation of Each Reel Rotating Speed

302 — Commanding of Each Reel Rotating Speed

303 — Input Displacement Distance of Dancer Arms

304 — Compensation Coefficient α1 Computed From Wire Velocity

305 — Compensation Coefficient α2 Computed From Each Winding Diameter

306 — Computation of Each Reel Rotating Speed

307 — Commanding of Change in Each Reel Rotating Speed

308 — Operation End Signal ON?

NO

YES

END

# Fig.13

# Fig.14

START

↓

400 Operation End? — NO

↓ YES

401 Reel Motors Rotated In Direction Loosening Wire

↓

402 Dancer Arm At Position Just Before Lowermost Position ? — NO

↓ YES

403 Reel Motor Stop Servo Lock

↓

404 Timer Start

↓

405 Predetermined Time Length Measured? — NO

↓ YES

406 Reel Motor Servo Lock Released

↓

407 Dancer Arm Lowermost Position ? — NO

↓ YES

END

# Fig.15

# Fig.16

```
                    ┌─────────────┐
                    │    START    │
                    └─────────────┘
                           │
                           ▼
                        ╱╲  ╲500
          NO         ╱      ╲
      ◄──────────   ╱Traverser╲
                    ╲At Upper End╱
                    ╲     ?    ╱
                     ╲      ╱
                       ╲  ╱
                        │ YES
                        ▼
                       ╱╲
          NO         ╱    ╲
      ◄──────────   ╱Winding?╲
                    ╲        ╱╲501
                     ╲      ╱
                       ╲  ╱
                        │ YES
                        ▼
                 ┌──────────────┐
                 │    Count     │ ╲502
                 └──────────────┘
                        │
                        ▼
                       ╱╲
          NO         ╱    ╲
      ◄──────────   ╱Predetermined╲
                    ╲  Value? ╱╲503
                     ╲      ╱
                       ╲  ╱
                        │ YES
                        ▼
                 ┌──────────────┐
                 │   Overrun    │ ╲504
                 └──────────────┘
                        │
                        ▼
                       ╱╲
          NO         ╱    ╲
      ◄──────────   ╱Sensor ON?╲
                    ╲        ╱╲505
                     ╲      ╱
                       ╲  ╱
                        │ YES
                        ▼
                 ┌──────────────────┐
                 │Reversing Position│ ╲506
                 │   Compensated    │
                 └──────────────────┘
                        │
                        ▼
                 ┌──────────────────┐
                 │Counted Value Cleared│ ╲507
                 └──────────────────┘
```

# Fig.17

```
        START
          │
          ▼
    ┌──►  ◄┐
    │       │
  NO │  Initial  ◄── 600
    └─ Value Input
          ?
          │ YES
          ▼
  ┌─────────────────┐
  │ Set Initial Value │ ~601
  └─────────────────┘
          │
    ┌────►│
    │     ▼
    │ ┌───────────────────────┐
    │ │ Compute Unwinding Length │ ~602
    │ └───────────────────────┘
    │     │
    │     ▼
    │ ┌───────────────────────┐
    │ │ Compute Remaining Length │ ~603
    │ └───────────────────────┘
    │     │
    │     ▼
  NO│  Cutting  ◄── 604
    └─ Possible
          ?
          │ YES
          ▼
        END
```

# Fig.18

START

Sensor ON ? ~700
NO
YES

Compute Reversing Position ~701

Alteration In Speed ? ~703
YES
NO

Compensate Reversing Position ~704

Fast? ~705
YES
NO

Previous Reversing Position ~706

Slow? ~707

Compensated Distance Multiplied by K Times ~708

EP 1 068 920 B1

# Fig.19

# Fig.20

# Fig.21

# Fig.22